Europäisches Patentamt

European Patent Office

Office européen des brevets

(19)

(11) Veröffentlichungsnummer : **0 112 575**
**B1**

(12) **EUROPÄISCHE PATENTSCHRIFT**

(45) Veröffentlichungstag der Patentschrift :
**26.03.86**

(21) Anmeldenummer : **83113100.8**

(22) Anmeldetag : **24.12.83**

(51) Int. Cl.⁴ : **H 04 N   7/16**

(54) **Verfahren zum zeitweisen Abschalten eines Fernsehempfängers.**

(30) Priorität : **27.12.82 DE 3248146**

(43) Veröffentlichungstag der Anmeldung :
**04.07.84 Patentblatt 84/27**

(45) Bekanntmachung des Hinweises auf die Patenterteilung : **26.03.86 Patentblatt 86/13**

(84) Benannte Vertragsstaaten :
**AT BE CH DE FR GB IT LI NL SE**

(56) Entgegenhaltungen :
**EP-A- 0 053 885**

(73) Patentinhaber : **Walter, Martin**
**Erlenweg 14**
**D-7516 Karlsbad 1 (DE)**

(72) Erfinder : **Walter, Martin**
**Erlenweg 14**
**D-7516 Karlsbad 1 (DE)**

(74) Vertreter : **Trappenberg, Hans**
**Wendtstrasse 1**
**D-7500 Karlsruhe 21 (DE)**

## Beschreibung

Die Erfindung betrifft ein Verfahren zum zeitweisen Abschalten einzelner Kanäle des Wiedergabeteils eines Fernsehempfängers, der zum Empfang von Fernsehsignalen, die per Funk, Glasfaser oder Kabel von einem Fernsehrundfunksender oder von einem Videoaufzeichnungsgerät ausgehen, bestimmt ist.

Die Darbietungen des Fernsehens sind im allgemeinen Jedermann zugänglich. « Jedermann » bedeutet hierbei auch, daß gemeinhin alle Sendungen auch von Personen, insbesondere von Jugendlichen, gesehen werden können, die den Inhalt einer solchen Sendung noch nicht verarbeiten können oder fehlerhaft interpretieren. So können jugendgefährdende Programme in aller Regel nicht durch das Fernsehen übertragen werden, oder allenfalls zu solchen Zeiten und mit einem entsprechenden Vorspann-Hinweis, wo anzunehmen ist, daß Jugendliche nicht in der Lage sind, die Sendung zu empfangen.

Durch die Möglichkeit, derartige Sendungen, die Jugendlichen nicht zugänglich gemacht werden sollen, aufzuzeichnen, kann jedoch dieser Schutz umgangen werden, da das aufgezeichnete Material zu jeder beliebigen Tageszeit abgespielt werden kann.

Die Aufzeichnungsmöglichkeit von Fernsehsendungen beziehungsweise die Möglichkeit Filme von Videokasetten, die frei im Handel erhältlich sind, über das Fernsehgerät wiederzugeben, und zwar dann, wenn Jugendliche unbeaufsichtigt das Fernsehgerät beziehungsweise das Video-Wiedergabegerät bedienen können erlaubt ihnen wiederum den Zugriff zu solchem Material, das ihnen in ihrer Entwicklungszeit nicht zugänglich sein sollte. Gerade die Möglichkeit im Handel unschwer erreichbare Videofilme unbeaufsichtigt abspielen zu lassen, ist eine ernst zu nehmende Gefahr für die Entwicklung dieser Jugendlichen, da der Inhalt derartiger Videofilme teilweise weit über die Darstellungen hinausgehen, die im üblichen Fernsehprogramm gezeigt werden. So werden zunehmend Videokasetten zum Kauf oder zur Miete angeboten, deren wesentlicher Inhalt in der zum Selbstzweck erhobenen Darstellung extremer Gewalttätigkeiten gegen Menschen bestehen. Es handelt sich dabei in vielen Fällen um Spielfilme, die von der freiwilligen Selbstkontrolle der Filmwirtschaft nur mit Schnittauflagen für Personen über 18 Jahren zugelassen werden, die jedoch per Videokasette in voller Länge, einschließlich der beanstandeten Stellen, zu besichtigen sind.

Die in Kinos gezeigten Spielfilme unterliegen ebenfalls dieser angeführten freiwilligen Selbstkontrolle der Filmwirtschaft und sind unterteilt in Filme für verschiedene Altersgruppen. Abgesehen davon, daß zu beanstandende Szenen schon garnicht öffentlich gezeigt werden, kann der Besuch von Filmen, die nur für Personen einer bestimmten Altersgruppe zugelassen sind, visuell überwacht werden. Diese visuelle Überwachungsmöglichkeit besteht selbstverständlich beim Fernsehempfang und insbesondere bei der Wiedergabe von Videofilmen nicht.

Die Erfindung hat sich die Aufgabe gestellt, eine Möglichkeit anzugeben, wie Fernsehsendungen und Videokasetten so zu präparieren sind, daß sie erkennbar nur für bestimmte Altersklassen empfohlen werden und daß diese bestimmten Altersklassen auch nur, gesteuert durch den jeweiligen Erziehungsberechtigten, diese Fernsehsendungen beziehungsweise diese Videofilme betrachten können. Erreicht wird dies in erfindungsgemäßer Weise dadurch, daß dem Trägerfrequenzsignal des jeweiligen Kanals ein im Wiedergabeteil des Fernsehempfängers nicht hörbares und nicht sichtbares Kennungsfrequenzsignal aufmoduliert wird, das mit Hilfe eines Decoders zum Abschalten dieses Kanals führt. Dieses Kennungsfrequenzsignal ist zweckmäßigerweise gleich für sämtliche Kanäle, wobei durchaus auch mehrere Kennungsfrequenzen für verschiedene Selektionsmerkmale vorgesehen sein können. Es sollte auch vorgesehen sein, daß die Decoder für alle oder einzelne Kennungsfrequenzen mittels eines Code- oder Schlüsseltasters abschaltbar (überbrückbar) sind. Der Code des Codetasters wird hierbei nach der Erfindung zweckmäßigerweise willkürlich veränderbar über die Tasten des Bediengerätes des Fernsehers eingestellt.

Dem Stande der Technik (EP-A-0 053 885) zuzuzählen ist eine Elektronikanordnung, die das Ausstrahlen von Fernsehprogrammen durch dafür nicht autorisierte Personen verhindern soll. Hierzu wird der Tonträger des Gesamtsignals durch ein Erkennungssignal modifiziert. Wird dieses Signal nicht erkannt, wird die Synchronisation gestört, so daß eine Ausstrahlung nicht möglich ist. Bei der Erfindung hingegen wird das ausgestrahlte Gesamtsignal so moduliert, daß der im Wiedergabeteil des Fernsehempfängers vorgesehene Decoder dieses Kennungsfrequenzsignal erkennen und über entsprechende bekannte Abschaltglieder die Trägerfrequenz abschalten beziehungsweise den Empfang dieser Sendung verhindern kann.

Bei der Durchführung dieses Verfahrens schalten die jeweiligen Decoder, ist eine Sendung mit der beschriebenen Modulation versehen, den zutreffenden Kanal ab, so daß kein Bild erscheint. Die weiteren Kanäle des Fernsehgerätes werden hiervon nicht betroffen, können also empfangen werden. Hierbei muß die Modulation durchaus nicht über die gesamte Länge der Sendung durchgeführt werden, sondern auch lediglich nur zeitweise, so daß nur Ausschnitte der betreffenden Sendung nicht auf dem Bildschirm erscheinen. Um zu vermeiden, daß der Fernsehbenutzer eine Störung seines Gerätes vermutet, kann anstelle der normalen Sendung ein Hinweis auf das Abschalten durch den Decoder gebracht werden. Mittels dieses Verfahrens ist es daher möglich, sowohl Fernsehsendungen, wie selbstverständlich auch Fernsehsignale von Videokasetten so zu indizieren, daß die Betrachtung des gesamten Inhalts der Fernsehsendung nur dann möglich ist, wenn der betreffende Decoder abgeschaltet beziehungsweise überbrückt ist. Dieses Abschalten beziehungsweise Überbrücken kann an dem nur dem Erziehungsberechtigten zugänglichen Codetaster oder Schlüsseltaster vorgenommen werden, der damit festlegt, was — auch in seiner Abwesenheit — über das Fernsehgerät empfangen werden kann. Hierbei ist es gleichgültig, ob die Signale für das Fernsehgerät von einem Fernsehsender oder von einem Aufzeichnungsgerät stammen, oder ob sie per Kabel übertragen werden.

Durchaus denkbar ist es, daß die verschiedenen Kennungsfrequenzsignale den vom Kino her bekannten Altersgruppen zugeordnet werden, daß also Kennungsfrequenzsignale für die Unbedenklichkeit von Sendungen für die Altersklassen 10, 14, 16 und 18 Jahre festgelegt werden und daß der Codebeziehungsweise Schlüsseltaster auch mit entsprechenden Stellungen rastbar ist, so daß, beispielsweise bei der Stellung « 18 » sämtliche Decoder überbrückt sind, bei der Stellung « 16 » jedoch lediglich die Decoder für « 10 », « 14 » und « 16 ». Sendungen die für Personen über 16 Jahren bestimmt sind, können also in dieser Codetasterstellung nicht empfangen werden.

Ist das Aufmodulieren des Kennungsfrequenzsignals in den Fernsehanstalten ohne Schwierigkeiten durchzuführen, so trifft dies auch zu für das Aufzeichnen von Videofilmen. Außerdem ist es auch sehr einfach durch eine Aufsichtsbehörde wie auch beispielsweise durch den Erziehungsberechtigten überprüfbar, ob Videofilme mit einer zutreffenden Modulation versehen sind oder nicht. Das Betrachten von Fernsehsendungen und Videofilmen durch nicht Berechtigte kann daher ohne Schwierigkeiten von dem jeweiligen Erziehungsberechtigten unterbunden werden.

Zweckmäßigerweise wird die jeweilige Kennungsfrequenz wie auch die Schaltstellung der Decoder optisch sichtbar gemacht um eine Überprüfung sowohl der Stufe für die die jeweilige Sendung zugelassen ist wie auch derjenigen, für die der Fernsehempfänger freigegeben ist, visuell kontrollieren zu können.

Um die Bedienung zu vereinfachen, kann der Codetaster auch abschließbar im Bediengerät des Fernsehers untergebracht sein.

## Patentansprüche

1. Verfahren zum zeitweisen Abschalten einzelner Kanäle des Wiedergabeteils eines Fernsehempfängers, der zum Empfang von Fernsehsignalen, die per Funk, Glasfaser oder Kabel von einem Fernsehrundfunksender oder von einem Videoaufzeichnungsgerät ausgehen, bestimmt ist, dadurch gekennzeichnet, daß dem Trägerfrequenzsignal des jeweiligen Kanals durch ein im Wiedergabeteil des Fernsehempfängers nicht hörbares und nicht sichtbares Kennungsfrequenzsignal aufmoduliert wird, das mit Hilfe eines Decoders zum Abschalten dieses Kanals führt.

2. Verfahren nach Anspruch 1, dadurch gekennzeichnet, daß die Kennungsfrequenz für alle Kanäle gleich ist.

3. Verfahren nach Anspruch 1 oder 2, dadurch gekennzeichnet, daß mehrere Kennungsfrequenzsignale für verschiedene Selektionsmerkmale vorgesehen sind.

4. Verfahren nach einem oder mehreren der vorhergehenden Ansprüche, dadurch gekennzeichnet, daß die Decoder für alle oder einzelne Kennungsfrequenzen mittels eines Code- oder Schlüsseltasters abschaltbar (überbrückbar) sind.

5. Verfahren nach Anspruch 4, dadurch gekennzeichnet, daß der Code des Codetasters willkürlich veränderbar über die Tasten des Bediengerätes des Fernsehers einstellbar ist.

6. Verfahren nach Anspruch 4 oder 5, dadurch gekennzeichnet, daß der Codetaster abschließbar im Bediengerät des Fernsehers untergebracht ist.

7. Verfahren nach einem oder mehreren der vorhergehenden Ansprüche, dadurch gekennzeichnet, daß das jeweilige Kennungsfrequenzsignal optisch signalisiert wird.

8. Verfahren nach einem oder mehreren der vorhergehenden Ansprüche, dadurch gekennzeichnet, daß der jeweiligen Schaltungsstellung der Decoder eine optische Anzeige zugeordnet ist.

## Claims

1. A method of switching off temporarily individual channels in the reproduction part of a television receiver which is intended for the reception of television signals which go out by radio, glass fibre or cable from a television broadcasting transmitter or from a video recording apparatus, characterized in that a modulation frequency signal inaudible and invisible in the reproduction part of the television receiver is modulated upon the carrier frequency signal of the respective channel and by means of a decoder leads to the switching-off of this channel.

2. A method as in Claim 1, characterized in that the modulation frequency is the same for every channel.

3. A method as in Claim 1 or 2, characterized in that a number of modulation frequency signals are provided for different selective features.

4. A method as in one or more of the preceding Claims, characterized in that the decoders for all of the or individual modulation frequencies may be switched off (bypassed) by means of one code key or lockable key.

5. A method as in Claim 4, characterized in that the code of the code key may be set via the keys of the control unit of the television apparatus in a manner which may be altered at option.

6. A method as in Claim 4 or 5, characterized in that the code key is accommodated in the control unit of the television apparatus so that it may be locked.

7. A method as in one or more of the preceding Claims, characterized in that the modulation frequency signal at the time is signalled optically.

8. A method as in one or more of the preceding Claims, characterized in that an optical indication is associated with the switching position of the decoder at any time.

**Revendications**

1. Procédé pour débrancher temporairement différents canaux de la partie de reproduction d'un récepteur de télévision qui est destiné à la réception de signaux de télévision qui partent, par ondes, fibre de verre, ou câble, d'un émetteur de radiodiffusion visuelle ou d'un magnétoscope, caractérisé en ce que l'on module le signal de fréquence porteuse du canal considéré par un signal de fréquence d'identification non audible et non visible dans la partie de reproduction du récepteur de télévision et qui, à l'aide d'un décodeur, conduit au débranchement de ce canal.

2. Procédé selon la revendication 1, caractérisé en ce que la fréquence d'identification est égale pour tous les canaux.

3. Procédé selon l'une des revendications 1 et 2, caractérisé en ce que plusieurs signaux de fréquence d'identification sont prévus pour différentes caractéristiques de sélection.

4. Procédé selon une ou plusieurs des revendications précédentes, caractérisé en ce que les décodeurs destinés à toutes les fréquences d'identification ou à certaines de celles-ci peuvent être débranchés (pontés) au moyen d'un manipulateur de code ou de clef.

5. Procédé selon la revendication 4, caractérisé en ce que le code du manipulateur de code peut être établi, de façon variable à volonté, par l'intermédiaire des touches du dispositif de manœuvre du téléviseur.

6. Procédé selon l'une des revendications 4 et 5, caractérisé en ce que le manipulateur de code est logé de manière à pouvoir être enfermé dans le dispositif de manœuvre du téléviseur.

7. Procédé selon une ou plusieurs des revendications précédentes, caractérisé en ce que le signal de fréquence d'identification dont il s'agit est signalisé optiquement.

8. Procédé selon une ou plusieurs des revendications précédentes, caractérisé en ce qu'à la position momentanée des décodeurs est adjoint un affichage optique.